# EUROPEAN PATENT APPLICATION

(11) **EP 4 303 893 A1**
(43) Date of publication of application: **10.01.2024**
(21) Application number: 22770179.4
(22) Date of filing: 17.01.2022
(51) Int. Cl.: H01F 1/057, H01F 1/055, H01F 41/02

(54) **R-T-B MAGNET AND PREPARATION METHOD THEREFOR**

(30) Priority: 17.03.2021 CN 202110286519
(71) Applicant: Fujian Changting Golden Dragon Rare-Earth Co., Ltd., Fujian 366300 (CN)
(72) Inventor: MOU, Weiguo, Longyan, Fujian 366300 (CN); HUANG, Jiaying, Xiamen, Fujian 361000 (CN)
(74) Representative: karo IP
(86) International application number: PCT/CN2022/072252
(87) International publication number: WO 2022/193819

(57) **Abstract**

The invention discloses a R-T-B magnet and a preparation method thereof. The R-T-B magnet comprises the following components of: ≥ 29 wt% of R, said R is a rare earth element comprising Nd, wherein the content of Nd in all components is ≥ 22 wt%; 0.2-0.75 wt% of Ti+Nb; 0.05-0.45 wt% of Cu; 0.955-1.15 wt% of B; and 58-69 wt% of Fe, wherein wt% is a ratio of the mass of respective component to the total mass of all components; and the mass ratio of said Ti to said Nb is (1-5):1. The present invention further optimizes the coordination relationship between the elements added in the R-T-B magnet, and the R-T-B magnet with better magnetic properties such as higher remanence, coercivity and squareness can be prepared by using this formula.

## Description

### FIELD OF THE INVENTION

The invention relates to a R-T-B magnet and a preparation method thereof.

### BACKGROUND OF THE INVENTION

As an important class of rare earth functional materials, neodymium-iron-boron permanent magnet materials have excellent comprehensive magnetic properties and are widely used in many fields such as the electronics industry and electric vehicles. However, the comprehensive magnetic properties of the current neodymium-iron-boron magnet materials are inferior, and it is difficult to prepare products with better performance, which cannot meet social needs.

For example, Chinese patent document CN108831650A discloses a neodymium iron boron magnet material and a preparation method thereof. By adding 0.05-0.5% of each of titanium, zirconium, niobium, and gallium to the neodymium-iron-boron material and adopting the principle of adding a small amount of multiple types, the amount of heavy rare earth elements in the material is reduced. In addition, the secondary aging temperature of each grade can be unified, thereby improving the universality of secondary aging. The addition of these four composite elements can achieve the purpose of refining the grains while improving the fluidity of the rare earth-rich phase at the grain boundary, improving various performance indicators of the material, especially the intrinsic coercivity and squareness, and reducing the amount of heavy rare earth. At the same time, the squareness of the product is improved, and the consistency and high temperature stability of the product are improved. The formula of Example 5 in this patent comprised the following components by mass of: 30.3% of PrNd, 0% of Dy, 0.97% of B, 0.5% of Co, 0.15% of Cu, 0.1% of Al, 0.08% of Ti, 0.1% of Nb, 0.2% of Ga, 0.05% of Zr, and Fe as the balance. A fine powder of 3.0 µm was prepared from the above components by a jet mill. A neodymium iron boron magnet material having a remanence of 14.4, a Hcj of 12.5, a maximum energy product of 50.82 and a squareness of 97% was obtained by a preparation process including a sintering temperature of 1040°C, a primary aging temperature of 900°C, and a secondary aging temperature of 520°C. However, the formulation of this magnet material was not further optimized. The coercivity of the obtained magnet material is at a low level, and the magnetic properties and temperature resistance thereof at high temperature are also at a lower level, which cannot be applied to products with higher requirements.

The technical problem that needs to be solved at present is to find a formula for neodymium iron boron magnets, and the magnet materials prepared by it have excellent comprehensive magnetic properties that is, high coercivity, high remanence, high temperature stability for coercivity, and high squareness.

### SUMMARY OF THE INVENTION

In order to remove the defect that the remanence, coercivity, high temperature stability and squareness of the magnets obtained according to the formula of the neodymium iron boron magnet material in the prior art cannot reach a higher level at the same time, the present invention provides a R-T-B magnet and a preparation method thereof. Through the combination of specific element types and specific contents in the R-T-B magnet of the present invention, the magnet materials with higher remanence, coercivity, squareness, and better high temperature stability can be prepared.

The present invention solves the above-mentioned technical problem mainly through the following technical solutions.

The invention provides a R-T-B magnet, comprising the following components of:
≥ 29 wt% of R, said R is a rare earth element comprising Nd, wherein the content of Nd in all components is ≥ 22 wt%;
0.2-0.75 wt% of Ti+Nb;
0.05-0.45 wt% of Cu;
0.955-1.15 wt% of B; and
58-69 wt% of Fe, wherein
wt% is a ratio of the mass of respective component to the total mass of all components; and the mass ratio of said Ti to said Nb is (1-5): 1.

In the invention, the content of R is preferably 30-32 wt%, such as 30 wt%, 30.6 wt%, 30.7 wt% or 31.2 wt%.

In the invention, the content of Nd is preferably 25-31 wt%, such as 28.5 wt%, 28.7 wt%, 29.1 wt%, 29.2 wt%, 29.3 wt%, 29.5 wt%, 29.7 wt% or 30.4 wt%.

In the invention, the R generally further comprises Pr and/or RH, wherein the RH is a heavy rare earth element.

Wherein, the content of the Pr is preferably 0.3 wt% or less, such as 0.2 wt%, wherein wt% is the mass percentage of Pr in the total mass of all components.

Wherein, the content of RH can be 2.5 wt% or less, such as 0.5 wt%, 0.8 wt%, 1 wt%, 1.1 wt%, 1.4 wt%, 2 wt%, or 2.2 wt%, wherein wt% is the mass percentage of RH in the total mass of all components.

Wherein, the RH preferably comprises Tb and/or Dy.

When the RH comprises Tb, the content of Tb is preferably 0.5-1.4 wt%, such as 0.5 wt%, 0.6 wt%, 0.8 wt%, 1 wt%, 1.1 wt% or 1.4 wt%, wherein wt% is the mass percentage of Tb in the total mass of all components.

When the RH comprises Dy, the content of Dy is preferably 0.5-2 wt%, such as 0.5 wt%, 1 wt%, 1.6 wt% or 2 wt%, wherein wt% is the mass percentage of Dy in the total mass of all components.

Wherein the ratio of the atomic percentage of the RH to the atomic percentage of the R is 0.1 or less, such as 0.02, 0.04 or 0.06, wherein the atomic percentage is the atomic percentage in the total content of all components.

In the invention, the content of Ti+Nb is preferably 0.22-0.7 wt%, such as 0.22 wt%, 0.28 wt%, 0.35 wt%, 0.38 wt%, 0.45 wt%, 0.58 wt%, 0.59 wt% or 0.7 wt%, more preferably 0.25-0.55 wt%. Those skilled in the art know that the Ti+Nb refers to the sum of the mass content of Ti and the mass content of Nb in the R-T-B magnet.

In the invention, the mass ratio of Ti to Nb is (1.2-4.8):1, such as 1.2:1, 1.8:1, 2.5:1, 3.5:1, 3.8:1, 4:1 or 4.8:1, more preferably Ground is (1.5-3.5):1.

In the invention, the content of Ti is preferably 0.12-0.56 wt%, such as 0.12 wt%, 0.18 wt%, 0.25 wt%, 0.3 wt%, 0.35 wt%, 0.48 wt% or 0.56 wt%.

In the invention, the content of Nb is preferably 0.08-0.14 wt%, such as 0.08 wt%, 0.1 wt%, 0.11 wt% or 0.14 wt%.

In the invention, the content of Cu is preferably 0.06-0.39 wt%, such as 0.06 wt%, 0.15 wt%, 0.31 wt%, 0.34 wt%, 0.35 wt%, 0.36 wt%, 0.38 wt% or 0.39 wt%.

In the invention, the content of B is preferably 0.98-1.1 wt%, such as 0.99 wt%.

In the invention, the ratio of the atomic percentage of B to the atomic percentage of R can be 0.38 or more, such as 0.4, 0.41, 0.42, 0.43 or 0.44, wherein the atomic percentage is the atomic percentage in the total content of all components.

In the invention, the content of Fe is preferably 65-69 wt%, such as 66.64 wt%, 67.14 wt%, 67.25 wt%, 67.33 wt%, 67.42 wt%, 67.47 wt%, 67.55 wt%, 67.62 wt%, 67.64 wt%, 67.68 wt%, 67.7 wt%, 67.74 wt%, 67.88 wt%, 67.97 wt% or 68.34 wt%.

In the present invention, the R-T-B magnet may further comprise the conventional additive elements in the art, such as Co.

Wherein, the content of Co is preferably 1.2 wt% or less, such as 0.5 wt% or 1 wt%, wherein wt% is the mass percentage of Co in the total mass of all components.

In the present invention, those skilled in the art know that unavoidable impurities, such as one or more of C, O, Mn and Al, are generally introduced during the preparation of the neodymium iron boron magnet materials.

The inventors found that in the present invention, through the combination of the above-mentioned specific elements and their contents, after preparing R-T-B magnets, the magnet materials with significantly improved magnetic properties such as coercivity and squareness can be obtained. After further analysis, it can be seen that after the above-mentioned magnets with specific formula raw materials are prepared into R-T-B magnets, a TiₓNb₁ phase with a specific area percentage is formed between the Nd-rich phase and the main phase particles, wherein the X is 3-5, thereby significantly suppressing the grain growth and refining the grains, which improves the performance of the magnet material.

In the invention, the R-T-B magnet preferably further comprise a TiₓNb₁ phase, wherein the X is 3-5; the TiₓNb₁ phase is located between a Nd-rich phase and main phase particles. Those skilled in the art can know according to the TiₓNb₁ phase that "x" and "1" in the subscripts generally refer to a ratio of the atomic percentage of Ti in the TiₓNb₁ phase to the atomic percentage of Nb in the TiₓNb₁ phase, respectively.

In the present invention, those skilled in the art know that the Nd-rich phase generally covers the main phase particles. Therefore, in the present invention, the main phase particles in the R-T-B magnet are generally covered by the TiₓNb₁ phase and the Nd-rich phase in sequence.

Wherein, the ratio of the area of the TiₓNb₁ phase to the total area of the main phase particles is preferably 1- 2%, such as 1.3%, 1.4%, 1.5%, 1.6% or 1.7%. Those skilled in the art know that the main phase particles generally refer to the Nd₂Fe₁₄B phase. In the present invention, the area of the TiₓNb₁ phase or the total area of the main phase particles generally refers to the area thereof occupied in the cross-section of the detected R-T-B magnet during FE-EPMA detection respectively.

In a preferable example of the invention, the R-T-B magnet comprises the following components of: 29.3 wt% of Nd, 1.4 wt% of Tb, 0.39 wt% of Cu, 0.18 wt% of Ti, 0.1 wt% of Nb, 0.99 wt% of B and 67.64 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.40%.

In a preferable example of the invention, the R-T-B magnet comprises the following components of: 29.3 wt% of Nd, 1.4 wt% of Tb, 0.38 wt% of Cu, 0.3 wt% of Ti, 0.08 wt% of Nb, 0.99 wt% of B and 67.55 wt% of Fe, wherein wt% is the ratio of the mass of respective component to the total mass of all components; the R-T-B magnet comprises a Ti₄Nb₁ phase; the Ti₄Nb₁ phase is located between a Nd-rich phase and main phase particles; and the ratio of the area of the Ti₄Nb₁ phase to the total area of the main phase particles is 1.40%.

In a preferable example of the invention, the R-T-B magnet comprises the following components of: 29.3 wt% of Nd, 1.4 wt% of Tb, 0.39 wt% of Cu, 0.48 wt% of Ti, 0.11 wt% of Nb, 0.99 wt% of B and 67.33 wt% of Fe, wherein wt% is the ratio of the mass of respective component to the total mass of all components; the R-T-B magnet comprises a Ti₅Nb₁ phase; the Ti₅Nb₁ phase is located between a Nd-rich phase and main phase particles; and the ratio of the area of the Ti₅Nb₁ phase to the total area of the main phase particles is 1.70%.

In a preferable example of the invention, the R-T-B magnet comprises the following components of: 29.3 wt% of Nd, 1.4 wt% of Tb, 0.36 wt% of Cu, 0.56 wt% of Ti, 0.14 wt% of Nb, 0.99 wt% of B and 67.25 wt% of Fe, wherein wt% is the ratio of the mass of respective component to the total mass of all components; the R-T-B magnet comprises a Ti₅Nb₁ phase; the Ti₅Nb₁ phase is located between a Nd-rich phase and main phase particles; and the ratio of the area of the Ti₅Nb₁ phase to the total area of the main phase particles is 1.80%.

In a preferable example of the invention, the R-T-B magnet comprises the following components of: 29.3 wt% of Nd, 1.4 wt% of Tb, 0.39 wt% of Cu, 0.12 wt% of Ti, 0.1 wt% of Nb, 0.99 wt% of B and 67.7 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.3%.

In a preferable example of the invention, the R-T-B magnet comprises the following components of: 29.3 wt% of Nd, 1.4 wt% of Tb, 0.34 wt% of Cu, 0.25 wt% of Ti, 0.1 wt% of Nb, 0.99 wt% of B and 67.62 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.5%.

In a preferable example of the invention, the R-T-B magnet comprises the following components of: 29.3 wt% of Nd, 1.4 wt% of Tb, 0.39 wt% of Cu, 0.35 wt% of Ti, 0.1 wt% of Nb, 0.99 wt% of B and 67.47 wt% of Fe, wherein wt% is the ratio of the mass of respective component to the total mass of all components; the R-T-B magnet comprises a Ti₄Nb₁ phase; the Ti₄Nb₁ phase is located between a Nd-rich phase and main phase particles; and the ratio of the area of the Ti₄Nb₁ phase to the total area of the main phase particles is 1.6%.

In a preferable example of the invention, the R-T-B magnet comprises the following components of: Nd 29.3 wt%, Tb 1.4 wt%, Cu 0.31 wt%, Ti 0.48 wt%, Nb 0.1 wt%, B 0.99 wt% and Fe 67.42 wt%, wherein wt% is the ratio of the mass of respective component to the total mass of all components; the R-T-B magnet comprises a Ti₅Nb₁ phase; the Ti₅Nb₁ phase is located between a Nd-rich phase and main phase particles; and the ratio of the area of the Ti₅Nb₁ phase to the total area of the main phase particles is 1.5%.

In a preferable example of the invention, the R-T-B magnet comprises the following components of: 29.5 wt% of Nd, 1.1 wt% of Tb, 0.39 wt% of Cu, 0.18 wt% of Ti, 0.1 wt% of Nb, 0.99 wt% of B and 67.74 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.4%.

In a preferable example of the invention, the R-T-B magnet comprises the following components of: 30.4 wt% of Nd, 0.8 wt% of Tb, 0.39 wt% of Cu, 0.18 wt% of Ti, 0.1 wt% of Nb, 0.99 wt% of B and 67.14 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.5%.

In a preferable example of the invention, the R-T-B magnet comprises the following components of: 29.5 wt% of Nd, 0.5 wt% of Tb, 0.39 wt% of Cu, 0.18 wt% of Ti, 0.1 wt% of Nb, 0.99 wt% of B and 68.34 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.3%.

In a preferable example of the invention, the R-T-B magnet comprises the following components of: 28.7 wt% of Nd, 2 wt% of Dy, 0.39 wt% of Cu, 0.18 wt% of Ti, 0.1 wt% of Nb, 0.99 wt% of B and 67.64 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.4%.

In a preferable example of the invention, the R-T-B magnet comprises the following components of: 28.5 wt% of Nd, 0.6 wt% of Tb, 1.6 wt% of Dy, 0.39 wt% of Cu, 0.18 wt% of Ti, 0.1 wt% of Nb, 0.99 wt% of B and 67.64 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.5%.

In a preferable example of the invention, the R-T-B magnet comprises the following components of: 29.7 wt% of Nd, 1 wt% of Dy, 0.39 wt% of Cu, 0.18 wt% of Ti, 0.1 wt% of Nb, 0.99 wt% of B and 67.64 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.4%.

In a preferable example of the invention, the R-T-B magnet comprises the following components of: 29.2 wt% of Nd, 1 wt% of Tb, 0.5 wt% of Dy, 0.39 wt% of Cu, 0.18 wt% of Ti, 0.1 wt% of Nb, 0.99 wt% of B and 67.64 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.4%.

In a preferable example of the invention, the R-T-B magnet comprises the following components of: 29.3 wt% of Nd, 1.4 wt% of Tb, 0.39 wt% of Cu, 0.5 wt%, 0.18 wt% of Ti, 0.1 wt% of Nb, 0.99 wt% of B and 67.14 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.5%.

In a preferable example of the invention, the R-T-B magnet comprises the following components of: 29.3 wt% of Nd, 1.4 wt% of Tb, 0.39 wt% of Cu, 1 wt%, 0.18 wt% of Ti, 0.1 wt% of Nb, 0.99 wt% of B and 66.64 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.5%.

In a preferable example of the invention, the R-T-B magnet comprises the following components of: 29.3 wt% of Nd, 1.4 wt% of Tb, 0.35 wt% of Cu, 0.18 wt% of Ti, 0.1 wt% of Nb, 0.99 wt% of B and 67.68 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.5%.

In a preferable example of the invention, the R-T-B magnet comprises the following components of: 29.3 wt% of Nd, 1.4 wt% of Tb, 0.15 wt% of Cu, 0.18 wt% of Ti, 0.1 wt% of Nb, 0.99 wt% of B and 67.88 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.5%.

In a preferable example of the invention, the R-T-B magnet comprises the following components of: 29.3 wt% of Nd, 1.4 wt% of Tb, 0.06 wt% of Cu, 0.18 wt% of Ti, 0.1 wt% of Nb, 0.99 wt% of B and 67.97 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.3%.

In a preferable example of the invention, the R-T-B magnet comprises the following components of: 29.1 wt% of Nd, 0.2 wt% of Pr, 1.4 wt% of Tb, 0.39 wt% of Cu, 0.18 wt% of Ti, 0.1 wt% of Nb, 0.99 wt% of B and 67.64 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.5%.

The invention further provides a preparation method of a R-T-B magnet as mentioned above, comprising the steps of subjecting a raw mixture comprising the respective components for the R-T-B magnet as mentioned above to an aging treatment and then a cooling treatment, wherein:
the aging treatment comprises a primary aging treatment and a secondary aging treatment; and
the cooling treatment has a rate of 20°C/min or more.

In the present invention, the process of the primary aging treatment can be conventional in the field.

Wherein, the temperature for the primary aging treatment can be 860-920°C, such as 900°C.

Wherein, the time for the primary aging treatment can be 2.5-4h, such as 3h.

In the present invention, the process of the secondary aging treatment can be conventional in the field.

Wherein, the temperature for the secondary aging treatment can be 460-530°C, such as 510°C.

Wherein, the time for the secondary aging treatment can be 2.5-4h, such as 3h.

In the invention, the cooling treatment preferably has a rate of 20-40°C/min.

The cooling treatment includes the operation of cooling the material after the aging treatment.

In the present invention, those skilled in the art know that the preparation method generally further comprises the steps of smelting, casting, hydrogen decrepitation, pulverization, magnetic field shaping and sintering treatment before the aging treatment.

Wherein, the smelting can adopt the conventional smelting process in this field.

The vacuum degree for the smelting is, for example, 5×10⁻²Pa.

The temperature for the melting is, for example, 1550°C or less.

Said melting is generally carried out in a high-frequency vacuum induction melting furnace.

Wherein, the casting process can be conventional in the field, for example, a strip casting process.

The temperature for the casting can be 1390-1460°C, such as 1450°C.

The alloy sheet obtained after the casting can have a thickness of preferably 0.25-0.40 mm, such as 0.29 mm.

Wherein, the process of the hydrogen decrepitation generally comprises hydrogen absorption, dehydrogenation, and a cooling treatment in turn.

The hydrogen absorption can be preferably carried out under a condition of a hydrogen pressure of 0.085 MPa.

The dehydrogenation can be carried out under the condition of raising the temperature while evacuating, and the temperature for the dehydrogenation can be 480-520°C, For example, 500°C.

Wherein, the pulverization process can adopt the conventional technology in the field, such as jet mill pulverization.

The pulverization can be carried out in a gas atmosphere with an oxidizing gas content of 1000 ppm or less, and the oxidizing gas content refers to the content of oxygen or moisture.

The pressure during the pulverization is, for example, 0.68 MPa.

After the pulverization, a lubricant such as zinc stearate is generally added. The added amount of the lubricant may be 0.05-0.15%, for example 0.12%, of the mass of the powder obtained after the pulverization.

Wherein, the forming process may adopt a conventional process in the art, such as a magnetic field forming method.

The shaping is carried out at magnetic field strength of 1.8T or more under the protection of nitrogen atmosphere. For example, it is carried out at a magnetic field strength of 1.8-2.5T.

Wherein, the sintering process may be conventional in the art. The temperature for the sintering treatment may be 1000-1100°C, such as 1080°C. The time for the sintering treatment may be 4-8 hours, such as 6 hours. The sintering treatment is preferably performed under vacuum conditions, such as a vacuum condition of 5 × 10⁻³Pa.

In the present invention, when the R-T-B magnet further comprises heavy rare earth elements, the preparation method generally comprises grain boundary diffusion after the cooling treatment.

Wherein, the grain boundary diffusion can be a conventional process in the field, and generally the heavy rare earth elements are diffused by the grain boundary diffusion.

The temperature for the grain boundary diffusion may be 800-900°C, such as 850°C. The time for the grain boundary diffusion may be 5-10 hours, such as 8 hours.

Wherein, the method of adding heavy rare earth elements in the R-T-B magnet can refer to conventional methods in this field. Generally, 0-80% of heavy rare earth elements are added during smelting and the rest are added during grain boundary diffusion, such as 25%, 28%, 30%, 40%, 50% or 67%. The heavy rare earth elements added during smelting are, for example, Tb.

For example, when the heavy rare earth elements in the R-T-B magnet are Tb with a content of greater than 0.5 wt%, 25-50% of Tb is added during the smelting, and the rest is added during the grain boundary diffusion. For example, when the heavy rare earth elements in the R-T-B magnet are Tb and Dy, the Tb is added during smelting, and the Dy is added during the grain boundary diffusion. For example, when the heavy rare earth elements in the R-T-B magnet are Tb with a content of less than or equal to 0.5 wt%, or when the heavy rare earth elements in the R-T-B magnet are Dy, the heavy rare earth elements in the R-T-B magnet are added during the grain boundary diffusion.

The invention further provides a R-T-B magnet prepared by the preparation method as mentioned above.

On the basis of conforming to common knowledge in the field, the above-mentioned preferred conditions can be combined arbitrarily to obtain the preferred examples of the present invention.

The reagents and raw materials used in the present invention are all commercially available.

The positive progress effects of the present invention are as follows:
In the present invention, the formulation of the R-T-B magnet is further optimized through Ti and Nb with a specific coordination relationship as well as Nd, Cu and other elements, the coercivity of the obtained R-T-B magnet is significantly improved, and the remanence, high stability, squareness and other magnetic properties of the obtained R-T-B magnet are at a higher level.

### BRIEF DESCRIPTION OF THE DRAWINGS

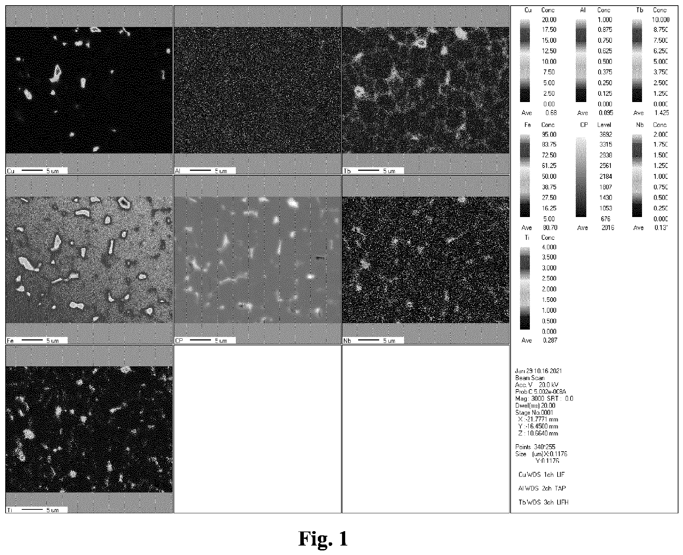

Fig. 1 shows the result of the FE-EPMA detection of the R-T-B magnet in Example 1.

### DETAILED DESCRIPTION OF THE INVENTION

The present invention is further illustrated below by means of examples, but the present invention is not limited to the scope of the examples. The experimental methods not indicating specific conditions in the following examples were carried out according to conventional methods and conditions, or were selected according to the product instructions.

### Example 1

The raw materials were prepared according to the compositions of the R-T-B magnet of Example 1 shown in Table 1 below to obtain a raw material mixture. The raw material mixture (0.4 wt% of Tb in the formula in Table 1 was added during the smelting) was sequentially subjected to smelting, casting, hydrogen crushing, pulverization, magnetic field forming, sintering, aging treatment, cooling treatment and grain boundary diffusion treatment. The raw material mixture did not comprise a heavy rare earth element.

Among them, the smelting was carried out in a high-frequency vacuum induction melting furnace with a vacuum degree of 5×10⁻²Pa, wherein the smelting temperature was 1550°C or less.

The casting was carried out by the strip casting process to obtain an alloy sheet with a thickness of 0.29 mm, wherein the casting temperature was 1450°C.

The hydrogen decrepitation included hydrogen absorption, dehydrogenation, and cooling treatment in sequence. The hydrogen absorption was carried out under the condition of a hydrogen pressure of 0.085MPa. The dehydrogenation was carried out under the condition of heating while vacuuming, and the dehydrogenation temperature was 500°C.

The pulverization Process: The pulverization included jet mill pulverization in an atmosphere having an oxidizing gas content of 100 ppm or less. The oxidizing gas refers to oxygen or moisture content. The pressure in the grinding chamber of the jet mill pulverization was 0.68 MPa. After pulverizing, a lubricant, that is, zinc stearate, was added and the addition amount thereof was 0.12% by weight of the powder after mixing.

The magnetic field shaping was carried out under the protection of a nitrogen atmosphere with a magnetic field strength of 1.8-2.5T.

The sintering treatment included sintering under a vacuum condition of 5×10⁻³Pa and 1080°C for 6h, and then cooling. Before cooling, Ar gas can be introduced to make the pressure reach 0.05MPa.

Aging treatment: the temperature for the primary aging was 900°C, and the time for the primary aging was 3h; the temperature for the secondary aging was 510°C, and the time for the secondary aging was 3h.

The rate of the cooling treatment was 20°C/min.

Grain boundary diffusion treatment: the remaining heavy rare earth elements (1 wt%

Tb) were melted and attached on the surface of the material, and grain boundary diffusion was carried out at 850°C for 8h.

2. The raw material formula and the rate of cooling treatment for the R-T-B magnets in Examples 2-21 and Comparative Examples 1-8 are as shown in Table 1, and the rest of the preparation process is the same as in Example 1. In Examples 2-10, 16-21 and Comparative Examples 1-8, 0.4wt% of Tb was added during smelting, and the remaining Tb was diffused into the R-T-B magnets through grain boundary diffusion. In Example 11, 0.4 wt% of Tb was diffused into the R-T-B magnet only through grain boundary diffusion. In Example 13 and Example 15, Tb was added during smelting, while Dy was diffused into the R-T-B magnet through grain boundary diffusion.

Table 1 Components and contents (wt%) of the R-T-B magnets

### Effect Example 1

### 1. Determination of Components:

The R-T-B magnets in Examples 1-21 and Comparative Examples 1-8 were measured using a high-frequency inductively coupled plasma optical emission spectrometer (ICP-OES). The test results are shown in Table 1 below.

**Table 1 Components and contents (wt%) of the R-T-B magnets**

| | Nd | Pr | Tb | Dy | Cu | Co | Ti | Nb | B | Fe | Ti+Nb | Ti/N b | Rate of Cooling Treatment |
|---|---|---|---|---|---|---|---|---|---|---|---|---|---|
| Example 1 | 29.3 | / | 1.4 | / | 0.39 | / | 0.18 | 0.1 | 0.99 | 67.64 | 0.28 | 1.8 | 20°C/min |
| Example 2 | 29.3 | / | 1.4 | / | 0.38 | / | 0.3 | 0.08 | 0.99 | 67.55 | 0.38 | 3.8 | 20°C/min |
| Example 3 | 29.3 | / | 1.4 | / | 0.39 | / | 0.48 | 0.11 | 0.99 | 67.33 | 0.59 | 4.4 | 20°C/min |
| Example 4 | 29.3 | / | 1.4 | / | 0.36 | / | 0.56 | 0.14 | 0.99 | 67.25 | 0.7 | 4 | 20°C/min |
| Example 5 | 29.3 | / | 1.4 | / | 0.39 | / | 0.12 | 0.1 | 0.99 | 67.7 | 0.22 | 1.2 | 20°C/min |
| Example 6 | 29.3 | / | 1.4 | / | 0.34 | / | 0.25 | 0.1 | 0.99 | 67.62 | 0.35 | 2.5 | 20°C/min |
| Example 7 | 29.3 | / | 1.4 | / | 0.39 | / | 0.35 | 0.1 | 0.99 | 67.47 | 0.45 | 3.5 | 20°C/min |
| Example 8 | 29.3 | / | 1.4 | / | 0.31 | / | 0.48 | 0.1 | 0.99 | 67.42 | 0.58 | 4.8 | 20°C/min |
| Example 9 | 29.5 | / | 1.1 | / | 0.39 | / | 0.18 | 0.1 | 0.99 | 67.74 | 0.28 | 1.8 | 20°C/min |
| Example 10 | 30.4 | / | 0.8 | / | 0.39 | / | 0.18 | 0.1 | 0.99 | 67.14 | 0.28 | 1.8 | 20°C/min |
| Example 11 | 29.5 | / | 0.5 | / | 0.39 | / | 0.18 | 0.1 | 0.99 | 68.34 | 0.28 | 1.8 | 20°C/min |
| Example 12 | 28.7 | / | 0 | 2 | 0.39 | / | 0.18 | 0.1 | 0.99 | 67.64 | 0.28 | 1.8 | 20°C/min |
| Example 13 | 28.5 | / | 0.6 | 1.6 | 0.39 | / | 0.18 | 0.1 | 0.99 | 67.64 | 0.28 | 1.8 | 20°C/min |
| Example 14 | 29.7 | / | 0 | 1 | 0.39 | / | 0.18 | 0.1 | 0.99 | 67.64 | 0.28 | 1.8 | 20°C/min |
| Example 15 | 29.2 | / | 1 | 0.5 | 0.39 | / | 0.18 | 0.1 | 0.99 | 67.64 | 0.28 | 1.8 | 20°C/min |
| Example 16 | 29.3 | / | 1.4 | / | 0.39 | 0.5 | 0.18 | 0.1 | 0.99 | 67.14 | 0.28 | 1.8 | 20°C/min |
| Example 17 | 29.3 | / | 1.4 | / | 0.39 | 1 | 0.18 | 0.1 | 0.99 | 66.64 | 0.28 | 1.8 | 20°C/min |
| Example 18 | 29.3 | / | 1.4 | / | 0.35 | / | 0.18 | 0.1 | 0.99 | 67.68 | 0.28 | 1.8 | 20°C/min |
| Example 19 | 29.3 | / | 1.4 | / | 0.15 | / | 0.18 | 0.1 | 0.99 | 67.88 | 0.28 | 1.8 | 20°C/min |
| Example 20 | 29.3 | / | 1.4 | / | 0.06 | / | 0.18 | 0.1 | 0.99 | 67.97 | 0.28 | 1.8 | 20°C/min |
| Example 21 | 29.1 | 0.2 | 1.4 | / | 0.39 | / | 0.18 | 0.1 | 0.99 | 67.64 | 0.28 | 1.8 | 20°C/min |
| Comparative Example 1 | 29.3 | / | 1.4 | / | 0.39 | / | 0.12 | 0.16 | 0.99 | 67.64 | 0.28 | 0.8 | 20°C/min |
| Comparative Example 2 | 29.3 | / | 1.4 | / | 0.39 | / | 0.6 | 0.11 | 0.99 | 67.21 | 0.71 | 5.5 | 20°C/min |
| Comparative Example 3 | 29.3 | / | 1.4 | / | 0.39 | / | 0.03 | 0.12 | 0.99 | 67.77 | 0.15 | 0.3 | 20°C/min |
| Comparative Example 4 | 29.3 | / | 1.4 | / | 0.39 | / | 0.6 | 0.2 | 0.99 | 67.12 | 0.8 | 3 | 20°C/min |
| Comparative Example 5 | 29.3 | / | 1.4 | / | 0.39 | / | 0.18 | 0.1 | 0.99 | 67.64 | 0.28 | 1.8 | 15°C/min |
| Comparative Example 6 | 29.3 | / | 1.4 | / | 0.39 | / | 0.18 | 0.1 | 0.99 | 67.64 | 0.28 | 1.8 | 10°C/min |
| Comparative Example 7 | 29.3 | / | 1.4 | / | 0 | / | 0.18 | 0.1 | 0.99 | 68.03 | 0.28 | 1.8 | 20°C/min |
| Comparative Example 8 | 29.3 | / | 1.4 | / | 0.48 | / | 0.18 | 0.1 | 0.99 | 67.55 | 0.28 | 1.8 | 20°C/min |

| | | | | | | | | | | | | | |
|---|---|---|---|---|---|---|---|---|---|---|---|---|---|
| Note: / indicates that this element is not comprised. Ga and Zr were not detected in the R-T-B magnets of the above-mentioned Examples and Comparative Examples. C, O, Mn and Al were inevitably introduced into the R-T-B magnet of the final product during the preparation process. The contents described in the respective Examples and Comparative Examples do not include these impurities. | | | | | | | | | | | | | |

### 2. Testing for Magnetic Performance

The R-T-B magnets in Examples 1-21 and Comparative Examples 1-8 were tested by using a PFM pulsed BH demagnetization curve testing equipment to obtain the data of remanence (Br), intrinsic coercivity (Hcj), maximum energy product (BHmax) and squareness (Hk/Hcj). The testing results are shown in Table 2 below.

**Table 2**

| | **20**°C **Br (kGs)** | **20**°C Hcj **(kOe)** | **20**°C **BHmax (MGOe)** | **20**°C **Hk/Hcj** |
|---|---|---|---|---|
| Example 1 | 14.22 | 27.8 | 48.1 | 0.99 |
| Example 2 | 14.19 | 27.9 | 47.9 | 0.99 |
| Example 3 | 14.14 | 28.0 | 47.6 | 0.99 |
| Example 4 | 14.12 | 28.1 | 47.5 | 0.99 |
| Example 5 | 14.23 | 27.3 | 48.2 | 0.98 |
| Example 6 | 14.2 | 27.9 | 48 | 0.99 |
| Example 7 | 14.18 | 27.9 | 47.9 | 0.98 |
| Example 8 | 14.15 | 28.0 | 47.7 | 0.99 |
| Example 9 | 14.31 | 26.5 | 48.8 | 0.99 |
| Example 10 | 14.5 | 25.0 | 50.1 | 0.99 |
| Example 11 | 14.69 | 23.5 | 51.4 | 0.99 |
| Example 12 | 13.99 | 24.0 | 46.6 | 0.98 |
| Example 13 | 14 | 28.5 | 46.7 | 0.99 |
| Example 14 | 14.27 | 21.4 | 48.5 | 0.99 |
| Example 15 | 14.15 | 26.5 | 47.7 | 0.99 |
| Example 16 | 14.24 | 27.4 | 48.3 | 0.99 |
| Example 17 | 14.23 | 27.9 | 48.2 | 0.99 |
| Example 18 | 14.22 | 28.1 | 48.1 | 0.99 |
| Example 19 | 14.22 | 27.2 | 48.1 | 0.99 |
| Example 20 | 14.22 | 27.0 | 48.1 | 0.99 |
| Example 21 | 14.22 | 27.9 | 48.1 | 0.99 |
| Comparative Example 1 | 14.22 | 25.8 | 48.1 | 0.99 |
| Comparative Example 2 | 14.22 | 25.6 | 48.1 | 0.99 |
| Comparative Example 3 | 14.22 | 25.7 | 48.1 | 0.99 |
| Comparative Example 4 | 14.22 | 25.9 | 48.1 | 0.99 |
| Comparative Example 5 | 14 | 26.5 | 46.7 | 0.93 |
| Comparative Example 6 | 14 | 26.7 | 46.7 | 0.88 |
| Comparative Example 7 | 14.22 | 24.8 | 48.1 | 0.96 |
| Comparative Example 8 | 14.22 | 25.3 | 48.1 | 0.94 |

### 3. Testing for Microstructures

### FE-EPMA Detection:

The vertically oriented faces of the R-T-B magnets in Examples 1-21 and Comparative Examples 1-8 were polished, and tested by using a Field Emission Electron Probe Microanalyzer (FE-EPMA) (JEOL, 8530F). Firstly, the distribution of Ti and Nb in the R-T-B magnets was determined by surface scanning using FE-EPMA. Then, the contents of Ti and Nb in the TiₓNb₁ phase (x is 3-5) were determined by single-point quantitative analysis using FE-EPMA. The test conditions included an accelerating voltage of 15kv and a probe beam current of 50 nA.

Fig. 1 shows the element distributions and contents of the R-T-B magnet in Example 1 detected by FE-EPMA. After single-point quantitative analysis, it is clear that a Ti₃Nb₁ phase was formed between the main phase particles and the Nd-rich phase in the R-T-B magnet in Example 1 of the present invention. In addition, the ratio of the area of the Ti₃Nb₁ phase to the total area of the main phase particles was 1.4%. The area of the Ti₃Nb₁ phase and the total area of the main phase particles respectively refer to the area thereof occupied in the cross-section (that is, the vertically oriented face as mentioned above) of the detected R-T-B magnet during FE-EPMA detection. The testing results of FE-EPMA for the R-T-B magnets prepared in Examples 1-21 and Comparative Examples 1-8 are shown in Table 3 below.

**Table 3**

| | Structure of Phase | Area Percentage of Phase |
|---|---|---|
| Example 1 | Ti₃Nb₁ | 1.4 |
| Example 2 | Ti₄Nb₁ | 1.4 |
| Example 3 | Ti₅Nb₁ | 1.7 |
| Example 4 | Ti₅Nb₁ | 1.8 |
| Example 5 | Ti₃Nb₁ | 1.3 |
| Example 6 | Ti₃Nb₁ | 1.5 |
| Example 7 | Ti₄Nb₁ | 1.6 |
| Example 8 | Ti₅Nb₁ | 1.5 |
| Example 9 | Ti₃Nb₁ | 1.4 |
| Example 10 | Ti₃Nb₁ | 1.5 |
| Example 11 | Ti₃Nb₁ | 1.3 |
| Example 12 | Ti₃Nb₁ | 1.4 |
| Example 13 | Ti₃Nb₁ | 1.5 |
| Example 14 | Ti₃Nb₁ | 1.4 |
| Example 15 | Ti₃Nb₁ | 1.4 |
| Example 16 | Ti₃Nb₁ | 1.5 |
| Example 17 | Ti₃Nb₁ | 1.5 |
| Example 18 | Ti₃Nb₁ | 1.5 |
| Example 19 | Ti₃Nb₁ | 1.5 |
| Example 20 | Ti₃Nb₁ | 1.3 |
| Example 21 | Ti₃Nb₁ | 1.5 |
| Comparative Example 1 | Ti₃Nb₁ | 1 |
| Comparative Example 2 | Ti₅Nb₁ | 0.9 |
| Comparative Example 3 | Ti₄Nb₁ | 0.8 |
| Comparative Example 4 | Ti₃Nb₁ | 0.9 |
| Comparative Example 5 | / | / |
| Comparative Example 6 | / | / |
| Comparative Example 7 | Ti₃Nb₁ | 0.9 |
| Comparative Example 8 | Ti₃Nb₁ | 0.8 |

| | | |
|---|---|---|
| Note: / indicates that the phase was not formed. | | |

From the above experimental data, it can be seen that the remanence, coercivity, and squareness or the like of the magnet materials prepared according to the formula for R-T-B magnet designed by the inventors are all at a relatively high level, and its comprehensive magnetic properties are excellent, which are suitable for applications in areas with high demands. After further analysis of the microstructure, the inventors found that after the R-T-B magnets with the above specific formula as magnet materials were prepared, a TiₓNb₁ phase (x is 3-5) with a specific area percentage was formed between the main phase particles and the Nd-rich phase, and the existence of this specific phase significantly improves the magnetic properties of the magnet materials, especially the intrinsic coercivity Hcj.

## Claims

1. A R-T-B magnet, **characterized by** comprising the following components of:
≥ 29 wt% of R, said R is a rare earth element comprising Nd, wherein the content of Nd in all components is ≥ 22 wt%;
0.2-0.75 wt% of Ti+Nb;
0.05-0.45 wt% of Cu;
0.955-1.15 wt% of B; and
58-69 wt% of Fe, wherein
wt% is a ratio of the mass of respective component to the total mass of all components; and the mass ratio of said Ti to said Nb is (1-5): 1.

2. The R-T-B magnet according to claim 1, **characterized in that**:
the content of R is 30-32 wt%, such as 30 wt%, 30.6 wt%, 30.7 wt% or 31.2 wt%; and/or
the content of Nd is 25-31 wt%, such as 28.5 wt%, 28.7 wt%, 29.1 wt%, 29.2 wt%, 29.3 wt%, 29.5 wt%, 29.7 wt% or 30.4 wt%; and/or
the R comprises Pr and/or RH, wherein the RH is a heavy rare earth element;
wherein, the content of the Pr is preferably 0.3 wt% or less, such as 0.2 wt%, wherein wt% is the mass percentage of Pr in the total mass of all components;
wherein, the content of RH is preferably 2.5 wt% or less, such as 0.5 wt%, 0.8 wt%, 1 wt%, 1.1 wt%, 1.4 wt%, 2 wt%, 2.2 wt%, wherein wt% is the mass percentage of RH in the total mass of all components;
wherein, the RH preferably comprises Tb and/or Dy;
when the RH comprises Tb, the content of Tb is preferably 0.5-1.4 wt%, such as 0.5 wt%, 0.6 wt%, 0.8 wt%, 1 wt%, 1.1 wt% or 1.4 wt%, wherein wt% is the mass percentage of Tb in the total mass of all components;
when the RH comprises Dy, the content of Dy is preferably 0.5-2 wt%, such as 0.5 wt%, 1 wt%, 1.6 wt% or 2 wt%, wherein wt% is the mass percentage of Dy in the total mass of all components;
wherein the ratio of the atomic percentage of the RH to the atomic percentage of the R is 0.1 or less, such as 0.02, 0.04 or 0.06.

3. The R-T-B magnet according to claim 1, **characterized in that**:
the content of Ti+Nb is 0.22-0.7 wt%, such as 0.22 wt%, 0.28 wt%, 0.35 wt%, 0.38 wt%, 0.45 wt%, 0.58 wt%, 0.59 wt% or 0.7 wt%, preferably 0.25-0.55 wt%; and/or
the mass ratio of Ti to Nb is (1.2-4.8):1, such as 1.2:1, 1.8:1, 2.5:1, 3.5:1, 3.8:1, 4:1 or 4.8:1, more preferably Ground is (1.5-3.5):1; and/or
the content of Ti is 0.12-0.56 wt%, such as 0.12 wt%, 0.18 wt%, 0.25 wt%, 0.3 wt%, 0.35 wt%, 0.48 wt% or 0.56 wt%; and/or
the content of Nb is 0.08-0.14 wt%, such as 0.08 wt%, 0.1 wt%, 0.11 wt% or 0.14 wt%.

4. The R-T-B magnet according to claim 1, **characterized in that**:
the content of Cu is 0.06-0.39 wt%, such as 0.06 wt%, 0.15 wt%, 0.31 wt%, 0.34 wt%, 0.35 wt%, 0.36 wt%, 0.38 wt% or 0.39 wt%; and/or
the content of B is 0.98-1.1 wt%, such as 0.99 wt%; and/or
the ratio of the atomic percentage of B to the atomic percentage of R in the R-T-B magnet is 0.38 or more, such as 0.4, 0.41, 0.42, 0.43 or 0.44; and/or
the content of Fe is 65-69 wt%, such as 66.64 wt%, 67.14 wt%, 67.25 wt%, 67.33 wt%, 67.42 wt%, 67.47 wt%, 67.55 wt%, 67.62 wt%, 67.64 wt%, 67.68 wt%, 67.7 wt%, 67.74 wt%, 67.88 wt%, 67.97 wt% or 68.34 wt%; and/or
the R-T-B magnet further comprises Co;
wherein, the content of Co is preferably 1.2 wt% or less, such as 0.5 wt% or 1 wt%, wherein wt% is the mass percentage of Co in the total mass of all components.

5. The R-T-B magnet according to any one of claims 1-4, **characterized in that**:
the R-T-B magnet comprises a TiₓNb₁ phase, wherein the X is 3-5; the TiₓNb₁ phase is located between a Nd-rich phase and main phase particles; and the ratio of the area of the TiₓNb₁ phase to the total area of the main phase particles is 1-2%;
wherein, the ratio of the area of the TiₓNb₁ phase to the total area of the main phase particles is, for example, 1.3%, 1.4%, 1.5%, 1.6% or 1.7%.

6. The R-T-B magnet according to claim 1, **characterized in that**:
the R-T-B magnet comprises the following components of: 29.3 wt% of Nd, 1.4 wt% of Tb, 0.39 wt% of Cu, 0.18 wt% of Ti, 0.1 wt% of Nb, 0.99 wt% of B and 67.64 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.40%; or
the R-T-B magnet comprises the following components of: 29.3 wt% of Nd, 1.4 wt% of Tb, 0.38 wt% of Cu, 0.3 wt% of Ti, 0.08 wt% of Nb, 0.99 wt% of B and 67.55 wt% of Fe, wherein wt% is the ratio of the mass of respective component to the total mass of all components; the R-T-B magnet comprises a Ti₄Nb₁ phase; the Ti₄Nb₁ phase is located between a Nd-rich phase and main phase particles; and the ratio of the area of the Ti₄Nb₁ phase to the total area of the main phase particles is 1.40%; or
the R-T-B magnet comprises the following components of: 29.3 wt% of Nd, 1.4 wt% of Tb, 0.39 wt% of Cu, 0.48 wt% of Ti, 0.11 wt% of Nb, 0.99 wt% of B and 67.33 wt% of Fe, wherein wt% is the ratio of the mass of respective component to the total mass of all components; the R-T-B magnet comprises a Ti₅Nb₁ phase; the Ti₅Nb₁ phase is located between a Nd-rich phase and main phase particles; and the ratio of the area of the Ti₅Nb₁ phase to the total area of the main phase particles is 1.70%; or
the R-T-B magnet comprises the following components of: 29.3 wt% of Nd, 1.4 wt% of Tb, 0.36 wt% of Cu, 0.56 wt% of Ti, 0.14 wt% of Nb, 0.99 wt% of B and 67.25 wt% of Fe, wherein wt% is the ratio of the mass of respective component to the total mass of all components; the R-T-B magnet comprises a Ti₅Nb₁ phase; the Ti₅Nb₁ phase is located between a Nd-rich phase and main phase particles; and the ratio of the area of the Ti₅Nb₁ phase to the total area of the main phase particles is 1.80%; or
the R-T-B magnet comprises the following components of: 29.3 wt% of Nd, 1.4 wt% of Tb, 0.39 wt% of Cu, 0.12 wt% of Ti, 0.1 wt% of Nb, 0.99 wt% of B and 67.7 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.3%; or
the R-T-B magnet comprises the following components of: 29.3 wt% of Nd, 1.4 wt% of Tb, 0.34 wt% of Cu, 0.25 wt% of Ti, 0.1 wt% of Nb, 0.99 wt% of B and 67.62 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.5%; or
the R-T-B magnet comprises the following components of: 29.3 wt% of Nd, 1.4 wt% of Tb, 0.39 wt% of Cu, 0.35 wt% of Ti, 0.1 wt% of Nb, 0.99 wt% of B and 67.47 wt% of Fe, wherein wt% is the ratio of the mass of respective component to the total mass of all components; the R-T-B magnet comprises a Ti₄Nb₁ phase; the Ti₄Nb₁ phase is located between a Nd-rich phase and main phase particles; and the ratio of the area of the Ti₄Nb₁ phase to the total area of the main phase particles is 1.6%; or
the R-T-B magnet comprises the following components of: Nd 29.3 wt%, Tb 1.4 wt%, Cu 0.31 wt%, Ti 0.48 wt%, Nb 0.1 wt%, B 0.99 wt% and Fe 67.42 wt%, wherein wt% is the ratio of the mass of respective component to the total mass of all components; the R-T-B magnet comprises a Ti₅Nb₁ phase; the Ti₅Nb₁ phase is located between a Nd-rich phase and main phase particles; and the ratio of the area of the Ti₅Nb₁ phase to the total area of the main phase particles is 1.5%; or
the R-T-B magnet comprises the following components of: 29.5 wt% of Nd, 1.1 wt% of Tb, 0.39 wt% of Cu, 0.18 wt% of Ti, 0.1 wt% of Nb, 0.99 wt% of B and 67.74 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.4%; or
the R-T-B magnet comprises the following components of: 30.4 wt% of Nd, 0.8 wt% of Tb, 0.39 wt% of Cu, 0.18 wt% of Ti, 0.1 wt% of Nb, 0.99 wt% of B and 67.14 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.5%; or
the R-T-B magnet comprises the following components of: 29.5 wt% of Nd, 0.5 wt% of Tb, 0.39 wt% of Cu, 0.18 wt% of Ti, 0.1 wt% of Nb, 0.99 wt% of B and 68.34 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.3%; or
the R-T-B magnet comprises the following components of: 28.7 wt% of Nd, 2 wt% of Dy, 0.39 wt% of Cu, 0.18 wt% of Ti, 0.1 wt% of Nb, 0.99 wt% of B and 67.64 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.4%; or
the R-T-B magnet comprises the following components of: 28.5 wt% of Nd, 0.6 wt% of Tb, 1.6 wt% of Dy, 0.39 wt% of Cu, 0.18 wt% of Ti, 0.1 wt% of Nb, 0.99 wt% of B and 67.64 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.5%; or
the R-T-B magnet comprises the following components of: 29.7 wt% of Nd, 1 wt% of Dy, 0.39 wt% of Cu, 0.18 wt% of Ti, 0.1 wt% of Nb, 0.99 wt% of B and 67.64 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.4%; or
the R-T-B magnet comprises the following components of: 29.2 wt% of Nd, 1 wt% of Tb, 0.5 wt% of Dy, 0.39 wt% of Cu, 0.18 wt% of Ti, 0.1 wt% of Nb, 0.99 wt% of B and 67.64 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.4%; or
the R-T-B magnet comprises the following components of: 29.3 wt% of Nd, 1.4 wt% of Tb, 0.39 wt% of Cu, 0.5 wt%, 0.18 wt% of Ti, 0.1 wt% of Nb, 0.99 wt% of B and 67.14 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.5%; or
the R-T-B magnet comprises the following components of: 29.3 wt% of Nd, 1.4 wt% of Tb, 0.39 wt% of Cu, 1 wt%, 0.18 wt% of Ti, 0.1 wt% of Nb, 0.99 wt% of B and 66.64 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.5%; or
the R-T-B magnet comprises the following components of: 29.3 wt% of Nd, 1.4 wt% of Tb, 0.35 wt% of Cu, 0.18 wt% of Ti, 0.1 wt% of Nb, 0.99 wt% of B and 67.68 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.5%; or
the R-T-B magnet comprises the following components of: 29.3 wt% of Nd, 1.4 wt% of Tb, 0.15 wt% of Cu, 0.18 wt% of Ti, 0.1 wt% of Nb, 0.99 wt% of B and 67.88 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.5%; or
the R-T-B magnet comprises the following components of: 29.3 wt% of Nd, 1.4 wt% of Tb, 0.06 wt% of Cu, 0.18 wt% of Ti, 0.1 wt% of Nb, 0.99 wt% of B and 67.97 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.3%; or
the R-T-B magnet comprises the following components of: 29.1 wt% of Nd, 0.2 wt% of Pr, 1.4 wt% of Tb, 0.39 wt% of Cu, 0.18 wt% of Ti, 0.1 wt% of Nb, 0.99 wt% of B and 67.64 wt% of Fe, wherein wt% is the ratio of the mass of respective component to the total mass of all components; the R-T-B magnet comprises a Ti₃Nb₁ phase; the Ti₃Nb₁ phase is located between a Nd-rich phase and main phase particles; and the ratio of the area of the Ti₃Nb₁ phase to the total area of the main phase particles is 1.5%.

7. A preparation method of a R-T-B magnet, **characterized by** comprising the steps of subjecting a raw mixture comprising the respective components for the R-T-B magnet according to any one of claims 1-4 and 6 to an aging treatment and then a cooling treatment, wherein:
the aging treatment comprises a primary aging treatment and a secondary aging treatment; and
the cooling treatment has a rate of 20°C/min or more.

8. The preparation method of the R-T-B magnet according to claim 7, **characterized in that**:
the temperature for the primary aging treatment is 860-920°C, such as 900°C; and/or
the time for the primary aging treatment is 2.5-4h, such as 3h; and/or
the temperature for the secondary aging treatment is 460-530°C, such as 510°C; and/or
the time for the secondary aging treatment is 2.5-4h, such as 3h; and/or
the cooling treatment has a rate of 20-40°C/min.

9. The preparation method of the R-T-B magnet according to claim 7 or 8, **characterized in that** the preparation method further comprises the steps of smelting, casting, hydrogen decrepitation, pulverization, magnetic field shaping and sintering treatment before the aging treatment,
wherein, the vacuum degree for the smelting is, for example, 5×10⁻²Pa;
wherein, the temperature for the melting is, for example, 1550°C or less;
wherein, the temperature for the casting is preferably 1390-1460°C, such as 1450°C;
wherein, the alloy sheet obtained after the casting has a thickness of preferably 0.25-0.40 mm, such as 0.29 mm;
wherein, the process of the hydrogen decrepitation preferably comprises hydrogen absorption, dehydrogenation, and a cooling treatment in turn, wherein the hydrogen absorption is preferably carried out under a condition of a hydrogen pressure of 0.085 MPa; the dehydrogenation is preferably carried out under the condition of raising the temperature while evacuating, and the temperature for the dehydrogenation is preferably 480-520°C, For example, 500°C;
wherein, the pulverization is preferably jet mill pulverization;
wherein, the magnetic field shaping is preferably carried out under the protection of a nitrogen atmosphere with a magnetic field strength of 1.8T or more, such as 1.8-2.5T;
wherein, the temperature for the sintering treatment is preferably 1000-1100°C, such as 1080°C;
wherein, the time for the sintering treatment is preferably 4-8h, such as 6h; and/or
wherein, when the R-T-B magnet comprises a heavy rare earth element, the preparation method further comprises a grain boundary diffusion treatment after the cooling treatment;
wherein, the temperature for the grain boundary diffusion treatment is preferably 800-900°C, such as 850°C;
wherein, the time for the grain boundary diffusion is preferably 5-10h, such as 8h;
wherein, the method of adding heavy rare earth elements in the R-T-B magnet preferably comprises the steps of adding 0-80% of heavy rare earth elements during the smelting and adding the remaining heavy rare earth elements during the grain boundary diffusion; for example, when the heavy rare earth elements in the R-T-B magnet are Tb with a content of greater than 0.5 wt%, 25-50% of Tb is added during the smelting, and the rest is added during the grain boundary diffusion; or, for example, when the heavy rare earth elements in the R-T-B magnet are Tb and Dy, the Tb is added during smelting, and the Dy is added during the grain boundary diffusion; or for example, when the heavy rare earth elements in the R-T-B magnet are Tb with a content of less than or equal to 0.5 wt%, or when the heavy rare earth elements in the R-T-B magnet are Dy, the heavy rare earth elements in the R-T-B magnet are added during the grain boundary diffusion.

10. A R-T-B magnet prepared by the preparation method of the R-T-B magnet according to any one of claims 7-9.
